# EUROPEAN PATENT SPECIFICATION

(11) **EP 1 510 276 B1**
(45) Date of publication and mention of the grant of the patent: **28.03.2007**
(21) Application number: 04019658.6
(22) Date of filing: 19.08.2004
(51) Int. Cl.: B23D 47/04, B27B 5/065

(54) **Pannel cutting machine**
Plattensägemaschine
Machine à couper des panneaux

(30) Priority: 27.08.2003 IT BO20030501
(43) Date of publication of application: 02.03.2005
(73) Proprietor: Naldi, Valter, 40137 Bologna (IT)
(72) Inventor: Naldi, Valter, 40137 Bologna (IT)

(56) References cited:
- DE-A- 3 737 228
- DE-A- 3 814 177
- US-A- 4 065 991
- US-A- 4 676 132
- US-A- 5 205 705

## Description

The present invention relates to a cutting machine for cutting packs of pannels according to the preamble of claim 1.

Such a machine is known from DE 3 737 228. More specifically, the present invention relates to a machine for cutting panels used in the manufacture of furniture, to which the following description refers purely by way of example.

A machine for cutting furniture panels normally comprises a horizontal table supporting the panels; a push or gripper carriage for moving the panels along the table in a first direction parallel to the table; and a panel cutting tool movable in a second direction perpendicular to the first direction.

The push or gripper carriage and the cutting tool are guided respectively by a first guide and a second guide perpendicular to the first guide.

The push carriage normally runs along a first guide comprising two rails, which extend over the table, are parallel to the first direction, and support opposite ends of the carriage.

In known embodiments, the carriage comprises wheels, which roll along the rails and support the thrust acting on the carriage; and two toothed pinions, each engaging a respective rack and which move the carriage in the first direction.

To improve cutting of the panels, a cutting machine has recently been proposed in which the grippers on the carriage slide along relative guides, which may be horizontal and perpendicular to the forward travelling direction of the carriage, or horizontal and parallel to the forward (or reverse) travelling direction of the carriage, or vertical with respect to the table supporting the panels for cutting. In other words, in this solution, each gripper is movable, by means of appropriate mechanisms, along three cartesian axes with respect to the carriage to which it is fitted, so as to permit complex, preset cutting schemes in cooperation with the other grippers.

Though undoubtedly an improvement as compared with existing machines, the cutting machine described is extremely expensive and difficult to maintain, on account of each gripper being operated by respective actuators, which are therefore complicated to control.

Moreover, for certain cutting schemes, the machine described is fairly limited. In particular, to ensure acceptable cutting quality, operation of the grippers should provide for a certain amount of tolerance which currently used complex actuating mechanisms do not allow.

DE-A1-37 37 228 (Schelling) describes a cutting machine for cutting packs of panels. The cutting machine comprises a first system, in turn, comprising a table for supporting the packs of panels and defining a work area, and a first carriage having a number of first gripping members for moving the packs of panels along the table. Moreover, the cutting machine comprises a second system. The second system, in turn, comprises a second carriage having second gripping members for moving the packs of panels along the table. The first gripping members and the second gripping members operate in the same work area.

However, the work area considered in DE-A1-37 37 228 is a transfer area, i.e. the packs of panels taken by the second system are previously transferred to the "work area" and then removed by the gripping members of the first system and forwarded to a cutting area. In other words, the gripping members of the second system don't reach the cutting area, but leave the packs of panels on the "work area" placed between the first system and the second system.

It is an object of the present invention to provide a panel cutting machine of straightforward design, and which provides for faster performance of cutting schemes comparable in complexity to that of the machine briefly described above.

According to the present invention, there is provided a cutting machine as claimed in Claim 1. Further advantageous embodiments are disclosed in the dependent claims 2-10.

A number of non-limiting embodiments of the present invention will be described by way of example with reference to the accompanying drawings, in which:
Figure 1 shows a side view of a first embodiment of the present invention, in which the two carriages are positioned one over the other, with the grippers in a first configuration;
Figure 2 shows the first embodiment in Figure 1, with the grippers of the two carriages in a second configuration;
Figure 3 shows a plan view of the first embodiment in Figures 1 and 2;
Figure 4 shows a side view of a second embodiment of the present invention;
Figure 5 shows a rear view of the second embodiment in Figure 4, with the grippers in a first configuration;
Figure 6 shows a rear view of the second embodiment in Figure 4, with the grippers in a second configuration;
Figure 7 shows a plan view of the second embodiment in Figures 4 to 6.

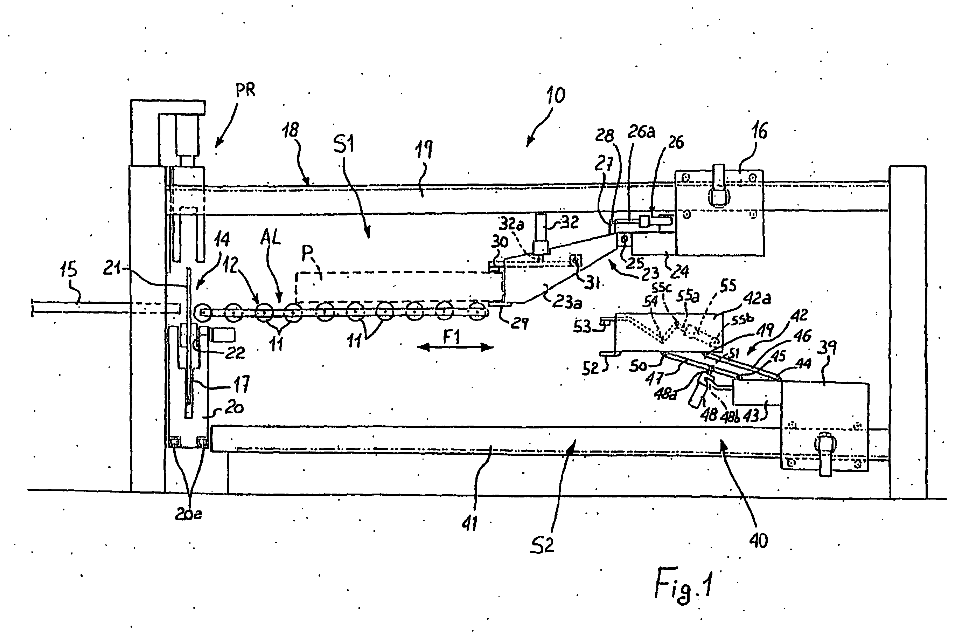

Number 10 in Figure 1 indicates as a whole a first embodiment of a cutting machine for cutting panels P used to manufacture products (not shown).

Cutting machine 10 comprises a first system S1 for handling panels P.

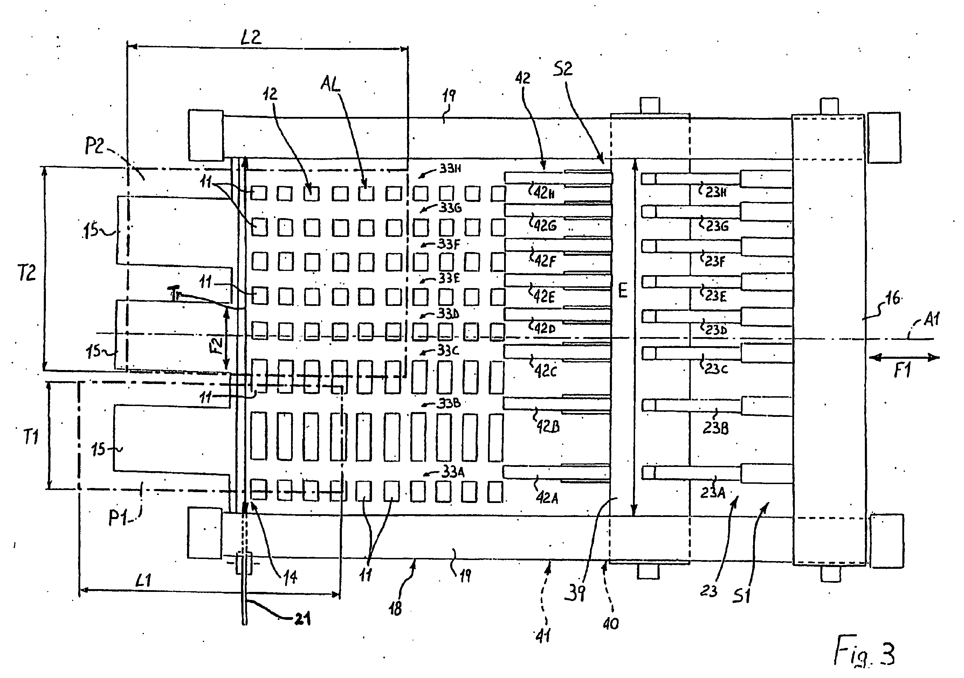

More specifically, first system S1 extends along an axis A1 (Figure 3), and comprises a set of supporting rollers 11 forming a horizontal table 12 for supporting panels P.

Table 12 defines a work area AL of first system S1.

Table 12 ideally continues in known manner in the form of a number of supporting surfaces 15 beyond a cutting section 14 described in detail later on.

Panels P are held firmly during the cutting operation by a pressure device PR located in known manner at cutting section 14. For the sake of simplicity, pressure device PR is only shown in Figures 1,2 and 4.

An operator (not shown) can therefore move in known manner between supporting surfaces 15 to turn and position panels P manually as required with respect to cutting section 14.

First system S1 defines a top system by which to grip and push panels P.

First system S1 comprises a top carriage 16 for feeding panels P in a direction parallel to table 12 and to axis A1, as indicated by the two-way arrow F1; and a cutting tool 17 forming part of cutting section 14, and which travels in a direction, as indicated by the two-way arrow F2, parallel to table 12 and perpendicular to arrow F1 and to axis A1 (Figure 3).

The term "work area AL" is used here to indicate the area whose transverse dimensions are defined by the useful transverse extension E of top carriage 16. The useful transverse extension E of top carriage 16 of first system S1 is substantially equal to the extension of the cutting line Tr.

Carriage 16 is supported on a guide 18 comprising two parallel top longitudinal members 19 located over table 12 and parallel to arrow F1 and table 12; and cutting tool 17 is carried on a carriage 20 located beneath table 12 and which travels along two guides 20a parallel to arrow F2 and to table 12.

More specifically, cutting tool 17 comprises a blade 21 projecting above table 12 through a slit 22 formed in carriage 20.

The drive of cutting tool 17 is known and therefore not described in detail.

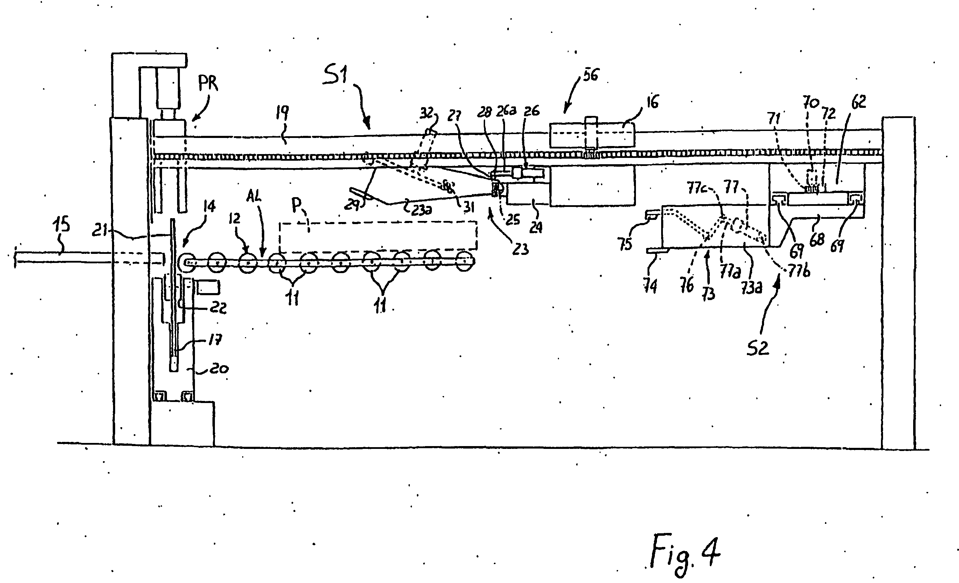

The drive (not shown in Figures 1 to 3) of carriage 16 comprises in known manner two electric motors, each of which rotates a respective toothed pinion meshing with a respective rack extending the full length of the longitudinal member 19 to which it is fitted (see the description relative to Figures 4 to 7). Carriage 16 is fitted in known manner with a number of grippers 23.

What is stated below relative to a generic gripper 23 applies to all the grippers 23A, 23B, 23C, 23D, 23E, 23F, 23G, 23H on carriage 16 (see Figure 3).

As shown in Figures 1 to 3, at gripper 23, carriage 16 comprises a bracket 24 projecting towards cutting section 14.

A main body 23a is hinged to bracket 24 by a hinge 25, and can be raised or lowered by an actuator 26 integral with carriage 16. The rod 26a of actuator 26 acts on an arm 27 projecting from main body 23a; for which purpose, the end of rod 26a is connected to arm 27 by an articulated joint 28.

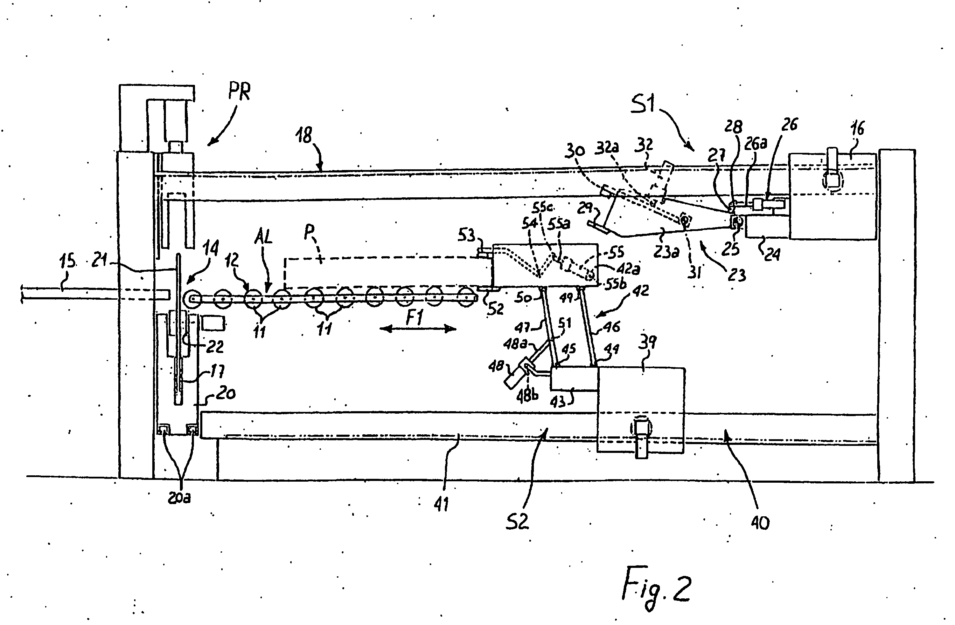

Figures 1 and 2 show clearly how gripper 23 is raised or lowered. More specifically, extraction of rod 26a lowers gripper 23 (Figure 1), and withdrawal of rod 26a raises gripper 23 with respect to work area AL.

Gripper 23 comprises a fixed bottom jaw 29 integral with main body 23a; and a movable top jaw 30 hinged to main body 23a by a hinge 31.

Movable top jaw 30 is moved towards or away from fixed bottom jaw 29 by an actuator 32, the rod 32a of which is extracted or withdrawn under the control of an electronic central control unit (not shown), and the body of which is carried by main body 23a of gripper 23.

Movable top jaw 30 is obviously moved towards fixed bottom jaw 29 to grip one end of a pack P of panels, as shown in Figure 1.

As shown in Figure 3, to enable grippers 23 to move towards cutting section 14 to pick up pack P of panels, corridors 33A-33H are formed between rollers 11 to prevent grippers 23 interfering with work area AL.

Operation of first system S1 is easily deducible from the foregoing description. More specifically, the pack P of panels, pushed manually by the operator from supporting surfaces 15 to cutting section 14, is gripped by the number of grippers 23 lowered by actuators 26 to cover the width of pack P.

For example, as shown in Figure 3, to handle a pack P1 of panels, only grippers 23A and 23B need be lowered, and are moved forward by carriage 16 (Figure 1) to pick up pack P1, while the other grippers 23C-23H remain in the raised position.

In the example shown, pack P1 of panels has a transverse dimension T1 and a longitudinal dimension L1.

The first embodiment of the present invention shown in Figures 1 to 3 comprises a second system S2 for handling panels P, and which is located beneath work area AL.

Second system S2 is similar to first system S1.

In fact, second system S2 also extends along axis A1 (Figure 3).

Second system S2 defines a bottom system by which to grip and push panels P.

Second system S2 comprises a bottom carriage 39 for feeding panels P in a direction parallel to table 12 and to axis A1, as indicated by the two-way arrow F1.

Carriage 39 is supported on a guide 40 comprising two bottom longitudinal members 41 located beneath table 12 and parallel to arrow F1 and table 12.

The drive (not shown) of carriage 39 comprises in known manner two electric motors, each of which rotates a respective toothed pinion meshing with a respective rack extending the full length of the longitudinal member 41 to which it is fitted.

Carriage 39 is fitted in known manner with a number of grippers 42.

What is stated below relative to a generic gripper 42 applies to all the grippers 42A, 42B, 42C, 42D, 42E, 42F, 42G, 42H on carriage 39.

As shown in Figures 1 to 3, at gripper 42, carriage 39 comprises a bracket 43 projecting towards cutting section 14.

Two arms 46 and 47 are hinged to bracket 43 by respective hinges 44 and 45, and are rotated by an actuator 48, the body of which is hinged to bracket 43 by a hinge 48b.

A main body 42a of gripper 42 is hinged to the two arms 46, 47 by two hinges 49 and 50.

As shown in Figures 1 and 2, rod 48a of actuator 48 is extracted (Figure 2) or withdrawn (Figure 1) to raise (Figure 2) or lower (Figure 1) main body 42a of gripper 42, so as to position, or not, gripper 42 in a work position at work area AL, which is the same as for first system S1.

As shown in Figure 2, rod 48a of actuator 48 is connected to arm 47 by an articulated joint 51.

Given the way in which they are hinged, arms 46 and 47 are obviously parallel to each other at all times when moving main body 42a.

Figures 1 and 2 show clearly how gripper 42 is raised or lowered. More specifically, extraction of rod 48a raises gripper 42 (Figure 2) towards work area AL, and withdrawal of rod 48a lowers gripper 42 with respect to work area AL (Figure 1).

Gripper 42 comprises a fixed bottom jaw 52 integral with main body 42a; and a movable top jaw 53 hinged to main body 42a by a hinge 54.

Movable top jaw 53 is moved towards or away from fixed bottom jaw 52 by an actuator 55 hinged to body 42a by a hinge 55b, and the rod 55a of which is extracted or withdrawn under the control of the electronic central control unit, and is hinged to movable top jaw 53 by a hinge 55c.

Movable top jaw 53 is obviously moved towards fixed bottom jaw 52 to grip one end of a pack P of panels, as shown in Figure 2.

As before, corridors 33A-33H between rollers 11 allow grippers 42 to move towards cutting section 14 to pick up pack P of panels.

Operation of second system S2 is easily deducible from the foregoing description. More specifically, the pack P of panels, pushed manually by the operator from supporting surfaces 15 to cutting section 14, is gripped by the number of grippers 42A-42H raised by actuators 48 to cover the width of pack P.

For example, as shown in Figure 3, to handle a pack P2 of panels, only grippers 42C-42H need be raised, and are moved forward by carriage 39 to pick up pack P2, while the other grippers 42A and 42B remain in the lowered position.

In the example shown, pack P2 of panels has a transverse dimension T2 and a longitudinal dimension L2.

Operating as described above, numerous cutting schemes can be performed as a function of the transverse and longitudinal dimensions of packs P1 and P2 of panels.

More specifically, the two systems S1 and S2 are independent, and can simultaneously perform different cutting schemes on two packs P1 and P2 of panels, and both using the same work area AL, which originally was only used by first system S1.

In other words, dimensions T1 and T2 of respective packs P1 and P2 of panels determine automatic activation or deactivation of grippers 23A-23H and 42A.42H, so that activation of certain grippers 23A-23H automatically deactivates the complementary grippers 42A-42H, to perform the desired cutting schemes using cutting tool 17.

Obviously, activation or deactivation of grippers 23A-23H and/or grippers 42A-42H, and operation of carriage 16 and/or 39 are controlled by the electronic central control unit (not shown) as a function of the transverse dimensions T1 and T2 of respective packs P1 and P2 of panels, and possibly also as a function of other parameters.

For which purpose, sensors (not shown) may be provided at work area AL or elsewhere to determine the transverse dimensions T1, T2 of packs P1, P2 of panels. The data acquired is then transmitted to the electronic central control unit, which accordingly, and possibly also on the basis of other parameters, controls lowering or raising of grippers 23A-23H and/or grippers 42A-42H and operation of carriage 16 and/or 39.

Obviously, in the event of a change in the transverse dimensions T1, T2 of respective packs P1, P2 of panels, the electronic central control unit again accordingly selects which grippers 23A-23H and 42A-42H to lower or raise with respect to work area AL, so as to grip packs P1 and P2 of panels and feed them in the direction indicated by two-way arrow F1.

As will be obvious to anyone skilled in the art, as opposed to one system S2, an embodiment (not shown) of cutting machine according to the invention may comprise a number of side by side systems S2.

In the second embodiment shown in Figures 4 to 7, first system S1 for handling panels P is practically the same, whereas the component parts of second system S2 differ.

First system S1 is therefore not described as a whole, and, where necessary, reference is made to the description given of it in the first embodiment with reference to Figures 1 to 3.

Unlike the first embodiment in Figures 1 to 3, however, the second embodiment shown in Figures 4 to 7 comprises a drive 56 for driving carriage 16 of first system S1.

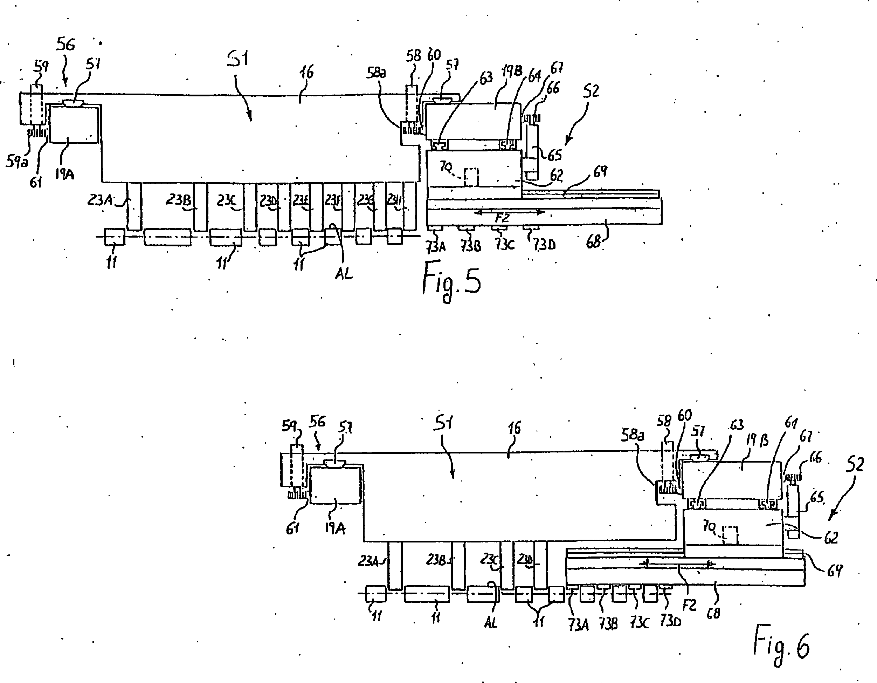

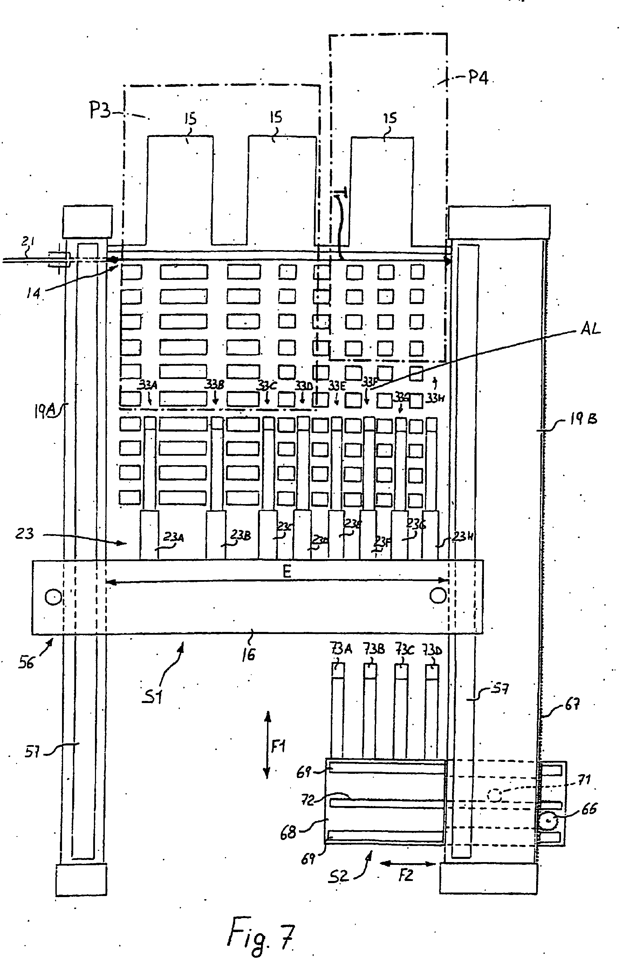

As shown in Figures 5 and 6, carriage 16 rests on two top longitudinal members 19A, 19B of guide 18, and in particular on two "dovetail" guide members 57, along which it is slid freely by two electric motors 58, 59, each having a respective toothed pinion 58a, 59a meshing with a respective rack 60, 61 fixed to respective longitudinal member 19A, 19B.

Rotation of toothed pinions 58a, 59a, controlled by the electronic central control unit (not shown), moves carriage 16 as required in the direction indicated by two-way arrow F1, as described previously with reference to the first embodiment in Figures 1 to 3.

System S2 in Figures 4 to 7 comprises a first carriage 62 mounted to slide along one of the two longitudinal members 19A, 19B (Figures 5 and 6) by means of two advantageously "dovetail" guide members 63, 64. First carriage 62 is also moved in the direction indicated by two-way arrow F1 by an electric motor 65, which is integral with first carriage 62 and has a toothed pinion 66 meshing with a rack 67 fixed to longitudinal member 19B.

System S2 also comprises a second carriage 68 carried by first carriage 62, and which, by means of a guide 69, also advantageously defined by two "dovetail" guide members (Figure 4), runs with respect to first carriage 62 in the direction indicated by two-way arrow F2 which, as stated, is perpendicular to arrow F1.

As shown in Figure 4, second carriage 68 is moved with respect to first carriage 62 by an electric motor 70 fixed to first carriage 62 and having a toothed pinion 71 which meshes with a rack 72 integral with second carriage 68.

As stated, rotation of toothed pinion 71 in either direction moves second carriage 68 with respect to first carriage 62 in either of the senses indicated by arrow F2.

As shown particularly in Figures 4 and 5, second carriage 68 has a number of grippers 73A, 73B, 73C, 73D. A generic gripper 73 (Figure 4) comprises a fixed bottom jaw 74 integral with the main body 73a of gripper 73; and a movable top jaw 75 hinged to main body 73a by a hinge 76.

Movable top jaw 75 is moved towards or away from fixed bottom jaw 74 by an actuator 77, the rod 77a of which is extracted or withdrawn as commanded by the electronic central control unit. The body of actuator 77 is hinged to main body 73a of gripper 73 by a hinge 77b, and rod 77a is connected to movable top jaw 75 by a hinge 77c.

Movable top jaw 75 is obviously moved towards fixed bottom jaw 74 to grip one end of pack P of panels.

Figure 5 shows a first configuration of system S2, in which second carriage 68 is extracted, i.e. outside work area AL of first system S1.

In the Figure 5 configuration, in fact, grippers 23A-23H of system S1 are all lowered to handle a generic pack P of panels in work area AL; in which case, grippers 73A-73D are located outside work area AL, and therefore cannot be used to handle a generic pack P of panels.

In the Figure 6 and 7 configuration, on the other hand, only grippers 23A-23D of system S1 are lowered, grippers 23E-23H are raised, and second carriage 68 is moved leftwards by electric motor 70 (Figures 6 and 7) to insert all of grippers 73A-73D in work area AL.

Systems S1 and S2 therefore cooperate to permit the cutting scheme, shown purely by way of example, in Figure 7.

That is, grippers 23A-23D of first system S1 are lowered to pick up a pack P3 of panels, while grippers 23E-23H are raised to allow second carriage 68 of second system S2 into work area AL to pick up a pack P4 of panels.

Pack P4 of panels is picked up by electric motor 65 moving first carriage 62 in the direction indicated by arrow F1.

As in the first embodiment in Figures 1 to 3, both systems S1, S2 can work simultaneously in the same work area AL to handle respective packs P3, P4 of panels. As stated relative to the first embodiment, sensors may also be provided in the second embodiment in Figures 4 to 7, to determine the transverse dimensions of packs P3, P4 of panels.

As opposed to one system S2 alongside system S1, a further embodiment may obviously comprise another system S2 on the opposite side to the one shown in Figures 4 to 7.

Complex cutting machines may also be conceived employing simultaneously one or more systems S2 as shown in Figures 1 to 3 (first embodiment) and/or one or more systems S2 as described with reference to Figures 4 to 7 (second embodiment).

The advantages of the cutting machine according to the present invention can be summed up in enabling simultaneous handling of packs P1, P2, P3, P4 by two systems S1, S2, which operate independently but using the same work area AL. This provides for a high degree of simplicity and versatility in the handling and cutting of packs of panels, using extremely straightforward, time-tested means.

## Claims

1. A cutting machine (10) for cutting packs of panels (P, P1, P2; P, P3, P4), and comprising a cutting section (14), a first system (S1), in turn comprising a table (12) for supporting the packs of panels (P, P1, P2; P, P3, P4) and defining a work area (AL), and a first carriage (16) having a number of first gripping members (23A-23H) for moving the packs of panels (P, P1, P2, P, P3, P4) along said table (12) in a first direction (F1); said first carriage (16) being supported on a guide (18); said first carriage (16) having means (58, 59, 50a, 59a, 60, 61) for moving it with respect to said guide (18); wherein the cutting machine (10) comprises at least one second system (S2) operated completely independently of said first system (S1); said second system (S2) in turn comprising at least one second carriage (39; 62, 68) having second gripping members (42A-42H; 73A-73D) for moving the packs of panels (P, P1, P2; P, P3, P4) along said table (12) in the first direction (F1); said second carriage (39; 62, 68) being supported on fixed supporting members (41; 19); said second carriage (39; 62, 68) having means (65, 66, 67) for moving it with respect to said fixed supporting members (41; 19);
and the cutting machine (10) being **characterized in that** said second gripping members (42A-42H; 73A-73D) of said second system (S2) are insertable in a work area (AL) defined transversely by the useful transverse extension (E) of said first system (S1), said work area (AT.) ideally continues in the form or a number of supporting surfaces (15) beyond a cutting section (14), and **in that** the first and second system (S1, S2) act on at least two packs of panels (P, P1, P2; P, P3, P4) to perform different cutting schemes, both using the same work area (AL) and the same cutting section (14).

2. A cutting machine (10) as claimed in Claim 1, **characterized in that** said second gripping members (42A-42H; 73A-73D) of said second system (S2) are insertable in the same work area (AL) of said first system (S1); wherein the work area (AL) is defined as a work area whose transverse dimensions are substantially equal to the useful transverse extension (E) of said first carriage (16), and to the transverse extension of a cutting line (Tr).

3. A cutting machine (10) as claimed in Claim 2, **characterized in that** at least one second gripping member (42A-42H) is insertable from underneath said work area (AL).

4. A cutting machine (10) as claimed in Claim 2, **characterised in that** at least one second gripping member (73A-73D) is insertable from the side of said work area (AL).

5. A cutting machine (10) as claimed in Claim 4, **characterized in that** said seconds system (S2) comprises a third carriage (62) movable in said first direction (F1), and a fourth carriage (68) carried by said third carriage (62) and movable, with respect to said third carriage (62), in a second direction (F2) perpendicular to said first direction (F1); said fourth carriage (68) having said second gripping members (73A-73D).

6. A cutting machine (10) as claimed in Claim 2, **characterized in that** at least one second gripping member (42A-42H) is insertable from beneath said work area (AL), and **in that** at least one second gripping member (73A-73D) is insertable from the side of said work area (AL).

7. A cutting machine (10) as claimed in any one of the foregoing Claims, **characterized in that** the first and second system (S1, S2) act simultaneously on at least two packs of panels (P1, P2; P3, P4) to perform different cutting schemes, both using the same work area (AL).

8. A cutting machine (10) as claimed in any one of the foregoing Claims, **characterized in that** the transverse dimensions of the packs ot panels (P, P1, P2;P, P3, P4) determine automatic activation or deactivation of the first and second gripping members (23A-23H, 42A-42H; 23A-23H, 73A-73D), so that activation of certain first and second gripping members (23A-23H, 42A-42H; 23A-23H, 73A-73D) automatically deactivates complementary first and second gripping members (23A-23H, 42A-42H; 23A-23H, 73A-73D), to perform the desired cutting schemes and activation or deactivation of the first and second gripping members (23A-23H, 42A-42H; 23A-23H, 73A-73D) and operation of the first and second carriages (16, 39; 16, 62, 68) are controlled by an electronic central control unit as a function of the transverse dimensions of the packs of panels (P, P1, P2; P, P3, P4) and of the relative cutting schemes.

9. A cutting machine (10) as claimed in Claim 8, **characterized by** comprising sensors for determining the characteristics of the packs of panels (P, P1, P2; P, P3, P4); the acquired data being transmitted to said electronic central control unit, which accordingly controls lowering or raising of the first and second gripping members (23A-23H, 42A-42H; 23A-23H, 73A-73D) and operation of the first and second carriages (16, 39; 16, 62, 68).

10. A cutting machine (10) as claimed in Claim 1, **characterized in that** grippers (23; 42; 73) of first and second system (S1, S2) move towards said cutting section (14) to pick up packs of panels (P, P1, P2; P, P3, P4) to be cut.

## Patentansprüche

1. Sägemaschine (10) zum Sägen von Plattenpaketen (P, P1, P2; P, P3, P4) mit einer Sägestation (14), einem ersten System (S1), welches seinerseits einen Tisch (12) zur Aufnahme der Plattenpakte (P, P1, P2; P, P3, P4) aufweist und einen Arbeitsbereich (AL) definiert, und mit einem ersten Träger (16), welcher eine Anzahl erster Greifelemente (23A-23H) zum Bewegen der Plattenpakete (P, P1, P2; P, P3, P4) entlang des Tisches (12) in einer ersten Richtung (F1) aufweist, wobei sich der erste Träger (16) gegenüber einer Führung (18) abstützt, der erste Träger (16) Mittel (58, 59, 58a, 59a, 60, 61) zu seiner Bewegung im Vergleich zu der Führung (18) aufweist, und wobei die Sägemaschine (10) wenigstens mit einem zweiten System (S2) ausgerüstet ist, welches völlig unabhängig vom ersten System (S1) betrieben wird, wobei das zweite System (S2) seinerseits wenigstens einen zweiten Träger (39; 62, 68) mit zweiten Greifelementen (42A-42H; 73A-73D) aufweist, um die Plattenpakete (P, P1, P2; P, P3, P4) entlang des Tisches (12) in der ersten Richtung (F1) zu bewegen, und wobei sich der zweite Träger (39; 62, 68) gegenüber einer festgelegten Auflage (41; 19) abstützt und der zweite Träger (39, 62, 68) mit Mitteln (65, 66, 67) ausgerüstet ist, um ihn im Vergleich zur festgelegten Auflage (41; 19) zu bewegen;
und wobei die Sägemaschine (10) **dadurch gekennzeichnet ist, dass** die zweiten Greifelemente (42A-42H; 73A-73D) des zweiten Systems (S2) in einem Arbeitsbereich (AL) einsetzbar sind, welcher in Querrichtung durch die nützliche Quererstreckung (E) des ersten Systems (S1) definiert wird, wobei sich der Arbeitsbereich (AL) idealerweise in Form einer Anzahl von Unterstützungsflächen (15) unterhalb der Sägestation (14) fortsetzt, und dass das erste und zweite System (S1, S2) auf wenigstens zwei Plattenpakete (P, P1, P2; P, P3, P4) einwirkt, um unterschiedliche Sägemuster zu erhalten, wobei beide den übereinstimmenden Arbeitsbereich (AL) und die gleiche Sägestation (14) einsetzen.

2. Sägemaschine (10) nach Anspruch 1, **dadurch gekennzeichnet, dass** die zweiten Greifelemente (42A-42H; 73A-73D) des zweiten Systems (S2) in den gleichen Arbeitsbereich (AL) des ersten Systems (S1) einsetzbar sind, wobei der Arbeitsbereich (AL) als ein Arbeitsbereich definiert ist, dessen Querausdehnungen im Wesentlichen gleich zu der nützlichen Querausdehnung (E) des ersten Trägers (16) und zur Querausdehnung einer Schnittlinie (Tr) ausgebildet sind,

3. Sägemaschine (10) nach Anspruch 2, **dadurch gekennzeichnet, dass** sich wenigstens ein zweites Greifelement (42A-42H) von unterhalb des Arbeitsbereiches (AL) einsetzen lässt.

4. Sägemaschine (10) nach Anspruch 2, **dadurch gekennzeichnet, dass** sich wenigstens ein zweites Greifelement (73A-73D) von der Seite des Arbeitsbereiches (AL) einsetzen lässt.

5. Sägemaschine (10) nach Anspruch 4, **dadurch gekennzeichnet, dass** das zweite System (S2) mit einem in der ersten Richtung (F1) bewegbaren dritten Träger (62) und einem vierten Träger (68) ausgerüstet ist, welcher von dem dritten Träger (62) getragen wird und sich im Vergleich zum dritten Träger (62) in einer zweiten Richtung (F2) senkrecht zur ersten Richtung (F1) bewegen lässt, wobei der vierte Träger (68) die zweiten Greifelemente (73A-73D) aufweist.

6. Sägemaschine (10) nach Anspruch 2, **dadurch gekennzeichnet, dass** sich wenigstens ein zweites Greifelement (42A-42H) von unterhalb des Arbeitsbereiches (AL) einsetzen lässt und dass wenigstens ein zweites Greifelement (73A-73D) von der Seite des Arbeitsbereiches (AL) einsetzen lässt.

7. Sägemaschine (10) nach einem der vorhergehenden Ansprüche, **dadurch gekennzeichnet, dass** das erste und zweite System (S1, S2) simultan an wenigstens zwei Plattenpaketen (P1, P2; P3, P4) arbeiten, um unterschiedliche Schnittmuster zu erzeugen, wobei beide den gleichen Arbeitsbereich (AL) nutzen.

8. Sägemaschine (10) nach einem der vorhergehenden Ansprüche, **dadurch gekennzeichnet, dass** die Querausdehnungen der Plattenpakete (P, P1, P2; P, P3, P4) eine automatische Aktivierung oder Deaktivierung der ersten und zweiten Greifelemente (23A-23H, 42A-42H; 23A-23H, 73A-73D) festlegen, so dass die Aktivierung bestimmter erster und zweiter Greifelemente (23A-23H, 42A-42H; 23A-23H, 73A-73D) automatisch die komplementären ersten und zweiten Greifelemente (23A-23H, 42A-42H; 23A-23H, 73A-73D) deaktiviert, um das gewünschte Sägemuster zu erhalten, wobei die Aktivierung oder Deaktivierung der ersten und zweiten Greifelemente (23A-23H, 42A-42H; 23A-23H, 73A-73D) und die Arbeit der ersten und zweiten Träger (16, 39; 16, 62, 68) durch eine elektronische Zentralkontrolleinheit als Funktion der Querausdehnungen der Plattenpakete (P, P1, P2; P, P3, P4) und des relativen Sägeschemas überwacht werden.

9. Sägemaschine (10) nach Anspruch 8, **dadurch gekennzeichnet, dass** Sensoren zur Bestimmung der Eigenschaften der Plattenpakete (P, P1, P2; P, P3, P4) realisiert sind, wobei die aufgenommenen Daten an die elektronische Zentralkontrolleinheit übermittelt werden, welche dementsprechend ein Absenken oder Anheben der ersten und zweiten Greifelemente (23A-23H, 42A-42H; 23A-23H, 73A-73D) steuert und die Arbeit der ersten und zweiten Träger (16, 39; 16, 62, 68).

10. Sägemaschine (10) nach Anspruch 1, **dadurch gekennzeichnet, dass** die Greifelemente (23; 42; 73) des ersten und zweiten Systems (S1, S2) sich gegenüber der Sägestation (14) bewegen, um zu sägende Plattenpakete (P, P1, P2; P, P3, P4) aufzunehmen.

## Revendications

1. Machine de coupe (10) pour couper des groupes de panneaux (P, P1, P2, ; P, P3, P4), et comprenant une section de coupe (14), un premier système (S1), comprenant à son tour une table (12) pour soutenir les groupes de panneaux (P, P1, P2 ; P, P3, P4) et définissant une zone de travail (AL), et un premier chariot (16) ayant un certain nombre de premiers éléments de préhension (23A-23H) destinés à déplacer les groupes de panneaux (P, P1, P2; P, P3, P4) le long de ladite table (12) dans une première direction (F1); ledit premier chariot (16) étant soutenu sur un guide (18); ledit premier chariot (16) ayant des moyens (58, 59, 58a, 59a, 60, 61) pour le déplacer par rapport au dit guide (18) ; dans laquelle la machine de coupe (10) comprend au moins un second système (S2) actionné entièrement indépendamment dudit premier système (S1) ; ledit second système (S2) comprenant à son tour au moins un deuxième chariot (39 ; 62, 68) ayant des seconds éléments de préhension (42A-42H ; 73A-73D) pour déplacer les groupes de panneaux (P, P1, P2 ; P, P3, P4) le long de ladite table (12) dans la première direction (F1) ; ledit second chariot (39 ; 62, 68) étant soutenu sur des éléments de support fixes (41 ;19) ; ledit deuxième chariot (39 ; 62, 68) ayant des moyens (65, 66, 67) pour le déplacer par rapport aux dits éléments de support fixes (41 ; 19) ;
et la machine de coupe (10) étant **caractérisée en ce que** lesdits seconds éléments de préhension (42A-42H ; 73A-73D) dudit second système (S2) peuvent être insérés dans une zone de travail (AL) définie transversalement par l'extension transversale utile (E) dudit premier système (S1), ladite zone de travail (AL) continue idéalement sous la forme d'un certain nombre de surfaces de support (15) au-delà d'une section de coupe (14), et **en ce que** les premier et second systèmes (S1, S2) agissent sur au moins deux groupes de panneaux (P, P1, P2 ; P, P3, P4) pour effectuer différents programmes de coupe, les deux utilisant la même zone de travail (AL) et la même section de coupe (14).

2. Machine de coupe (10) selon la revendication 1, **caractérisée en ce que** lesdits seconds éléments de préhension (42A-42H ; 73A-73D) dudit second système (S2) peuvent être insérés dans la même zone de travail (AL) dudit premier système (S1) ; dans laquelle la zone de travail (AL) est définie en tant que zone de travail dont les dimensions transversales sont sensiblement égales à l'extension transversale utile (E) dudit premier chariot (16), et à l'extension transversale d'une ligne de coupe (Tr).

3. Machine de coupe (10) selon la revendication 2, **caractérisée en ce qu'**au moins un second élément de préhension (42A-42H) peut être inséré depuis le dessous de ladite zone de travail (AL).

4. Machine de coupe (10) selon la revendication 2, **caractérisée en ce qu'**au moins un second élément de préhension (73A-73D) peut être inséré depuis le côté de ladite zone de travail (AL).

5. Machine de coupe (10) selon la revendication 4, **caractérisée en ce que** ledit second système (S2) comprend un troisième chariot (62) pouvant être déplacé dans ladite première direction (F1), et un quatrième chariot (68) transporté par ledit troisième chariot (62) et pouvant être déplacé, par rapport au dit troisième chariot (62), dans une seconde direction (F2) perpendiculaire à ladite première direction (F1) ; ledit quatrième chariot (68) ayant lesdits seconds éléments de préhension (73A-73D).

6. Machine de coupe (10) selon la revendication 2, **caractérisée en ce qu'**au moins un second élément de préhension (42A-42H) peut être inséré depuis le dessous de ladite zone de travail (AL), et **en ce qu'**au moins un second élément de préhension (73A-73D) peut être inséré depuis le côté de ladite zone de travail (AL).

7. Machine de coupe (10) selon l'une quelconque des revendications précédentes, **caractérisée en ce que** les premier et second systèmes (S1, S2) agissent simultanément sur au moins deux groupes de panneaux (P1, P2 ; P3, P4) pour effectuer différents programmes de coupe, les deux utilisant la même zone de travail (AL).

8. Machine de coupe (10) selon l'une quelconque des revendications précédentes, **caractérisée en ce que** les dimensions transversales des groupes de panneaux (P, P1, P2 ; P, P3, P4) déterminent l'activation ou la désactivation automatique des premiers et seconds éléments de préhension (23A-23H, 42A-42H ; 23A-23H, 73A-73D), de manière à ce que l'activation de certains premiers et seconds éléments de préhension (23A-23H, 42A-42H; 23A-23H, 73A-73D) désactive automatiquement les premiers et seconds éléments de préhension complémentaires (23A-23H, 42A-42H; 23A-23H, 73A-73D), afin d'effectuer les programmes de coupe souhaités, et l'activation ou la désactivation des premiers et seconds éléments de préhension (23A-23H, 42A-42H ; 23A-23H, 73A-73D) ainsi que le fonctionnement des premier et deuxième chariots (16, 39 ; 16, 62, 68) sont commandés par une unité de commande centrale électronique en fonction des dimensions transversales des groupes de panneaux (P, P1, P2 ; P, P3, P4) et des programmes de coupe relatifs,

9. Machine de coupe (10) selon la revendication 8, **caractérisée en ce qu'**elle comprend des détecteurs pour déterminer les caractéristiques des groupes de panneaux (P, P1, P2 ; P, P3, P4) ; les données acquises étant transmises à ladite unité de commande centrale électronique, qui commande en conséquence l'abaissement ou l'élévation des premiers et seconds éléments de préhension (23A-23H, 42A-42H; 23A-23H, 73A-73D) et le fonctionnement des premier et deuxième chariots (16, 39 ; 16, 62, 68).

10. Machine de coupe (10) selon la revendication 1, **caractérisée en ce que** des pinces (23 ; 42 ; 73) des premier et second systèmes (S1, S2) se déplacent vers ladite section de coupe (14) pour prélever des groupes de panneaux (P, P1, P2 ; P, P3, P4) destinés à être coupés.
